# EUROPÄISCHE PATENTSCHRIFT

(11) **EP 2 995 231 B1**
(45) Veröffentlichungstag und Bekanntmachung des Hinweises auf die Patenterteilung: **08.02.2017**
(21) Anmeldenummer: 15002601.1
(22) Anmeldetag: 04.09.2015
(51) Int. Cl.: A47K 3/40, E03F 5/04

(54) **DUSCHBODENPLATTEN-MODUL MIT AUFNAHMEELEMENT FÜR EIN BRAUSETASSEN-SCHRAUBVENTIL**
SHOWER TRAY MODULE WITH A HOLDER ELEMENT FOR A SHOWER TRAY SCREW VALVE
MODULE DE PLAQUE DE SOL DE DOUCHE DOTEE D'ELEMENT DE RECEPTION POUR UNE VANNE DE RECEVEUR DE DOUCHE

(30) Priorität: 11.09.2014 DE 102014113094
(43) Veröffentlichungstag der Anmeldung: 16.03.2016
(73) Patentinhaber: wedi GmbH, 48282 Emsdetten (DE)
(72) Erfinder: Wedi, Stephan, 48282 Emsdetten (DE)
(74) Vertreter: Träger, Denis

(56) Entgegenhaltungen:
- EP-A2- 0 811 773
- DE-A1- 10 131 338
- DE-A1-102004 036 652

## Beschreibung

Die Erfindung betrifft ein Duschbodenplatten-Modul, welches umfasst:
- eine Bodenplatte, aufweisend wenigstens eine Hartschaumschicht, welche wenigstens von einer ihren Flachseiten mit einer Kunstmörtelschicht beschichtet ist, wobei an der Bodenplatte eine durchgehende Öffnung eingearbeitet ist,
- ein in der Öffnung platziertes Aufnahmeelement für ein Brausetassen-Schraubventil eines Wasserablaufs, welcher mit einem Abflussrohr zu verbinden ist,
- wobei das Aufnahmeelement eine geneigte Innenfläche zum Einsetzen eines Kragens des Brausetassen-Schraubventils aufweist,
- wobei die besagte Innenfläche - im montierten Zustand des Aufnahmeelementes - sich in Richtung Abflussrohr verjüngt,
- und wobei das Aufnahmeelement eine Gesamthöhe aufweist, welche etwa einem Dickenmaß der Bodenplatte entspricht.

Ferner bezieht sich die Erfindung auf ein neuartiges Verfahren zur Herstellung von Duschbodenplatten-Modulen.

Gattungsgemäße Duchbodenplatten-Module der eingangs genannten Art umfassen ein Duschboard mit Punktentwässerung und sind unter der Produktbezeichnung "wedi Fundo Primo" Bestandteil des Vertriebsprogrammes der Anmelderin (wedi GmbH, DE-48282 Emsdetten). Das ringförmige, zur Adaption des Bodenablauftopfes in dem vorgefertigten Duschbodenelementes vorgesehene, Aufnahmeelement ist hierbei zweiteilig ausgeführt. Um die beiden Teile während der roboterunterstützen Montage des Aufnahmeelementes korrekt in die Öffnung einsetzen und miteinander verbinden zu können, muss die Bodenplatte gleichzeitig von zwei Seiten, oderumgedreht werden, da die Montage des Aufnahmeelementes von zwei Seiten der Bodenplatte durchgeführt werden muss. Außerdem muss die Öffnung an das Profil des Aufnahmeelementes entsprechend angepasst werden. Die Öffnungsprofilierung erfordert den Einsatz von unterschiedlichen Bohrern bzw. Fräsen. Dies ist zeit- und arbeitsaufwändig.

DE-A-101 31 338 offenbart ein Duschbodenplatten-Modul und ein Verfahren zu seiner Herstellung. Dieses Duschbodenplatten-Modul umfasst alle Merkmale des Oberbegriffs des Anspruchs 1.

Die Aufgabe der Erfindung ist, ein Duschbodenplatten-Modul der im Oberbegriff genannten Art zu entwickeln, dessen Aufnahmeelement sich durch einen neuartigen Aufbau auszeichnet, mit dem eine vereinfachte Montage an der Bodenplatte realisiert werden kann.

Diese Aufgabe ist durch ein gattungsgemäßes Duschbodenplatten-Modul gelöst, bei dem das Aufnahmeelement ein Schneidgewinde aufweist, dessen Außendurchmesser - im eingesetzten Zustand des Aufnahmeelementes - in Richtung Abflussrohr ansteigt.

Der Kern der Erfindung besteht darin, ein Schneidgewinde vorzusehen, das ein Innengewinde in ein Bohrloch der Bodenplatte schneidet.

Unter Schneidgewinde versteht man im vorliegenden Fall eine profilierte Einkerbung, die fortlaufend wendelartig um das kreisrunde Aufnahmeelement außen in einer Schraubenlinie verläuft. Die Einkerbung wird als Gewindegang bezeichnet.

Mit dem Schneidgewinde kann das Aufnahmeelement ins Material der Bodenplatte so eingedreht werden, bis ein Stützflansch des Aufnahmeelementes zum Anliegen an der Unterseite der Bodenplatte kommt. Erst das Vorhandensein des Schneidgewindes ermöglicht es, auf die Profilierung der durchgehenden Öffnung (Bohrlochs) zu verzichten. Die Öffnung an der Bodenplatte kann mit einfachem Werkzeug in einem Arbeitsgang als zylindrische Bohrung eingebracht sein.

Die Bohrung kann also eine oder zwei auf beiden Flachseiten liegende Kunstmörtelschichten und den dazwischen liegenden Hartschaumkern umfassen, in dessen porige Materialstruktur sich der Gewindegang mit seinem sich stets vergrößernden Durchmesser derart in den Hartschaum einschneidet, dass dieser einer lokalen, sich entlang des Gewindegangs bildenden Verdichtung erfährt, welche die Stabilität der entstandenen Verbindung verbessert.

Dabei sollen das Schneidgewinde und damit das ganze Aufnahmeelement aus wesentlich härterem Material als der Hartschaum der Bodenplatte, beispielsweise aus Thermo- oder Duroplast oder aus Metall gefertigt sein. Demensprechend kann das Aufnahmeelement samt Stützflansch in einem Materialstück aus Kunststoff im Spritzgussverfahren oder aus Metall hergestellt sein. Eine mögliche Ausführung bezieht sich auf Kunststoffbearbeitung im Lasersinterverfahren oder mit Hilfe eines computergesteuerten 3D-Druckers wobei als Ausgangsmaterial ABS-Kunststoff (Acrylnitril-Butadien-Styrol) oder andere Thermoplasten eingesetzt werden können. Auf das aus Kunststoff gefertigte Aufnahmeelement kann auch eine dauerhafte Metallbeschichtung aufgetragen sein. Schließlich kann das Aufnahmeelement durch CNC-Bearbeitung hergestellt sein.

Das Schneidgewinde kann zahn- oder widerhakenartige Strukturelemente aufweisen, wie Fischschuppen oder Spitzen, welche gegen eine Eindrehrichtung des Aufnahmeelementes gerichtet sind. Diese Maßnahme verbessert zusätzlich die Stabilität der durch das Einschneiden entstandenen Verbindung.

Bei einer anderen Ausführungsform der Erfindung kann das Aufnahmeelement zwecks Anpassung an die Dicke der Bodenplatte aus wenigstens zwei Rotationskörpern zusammengesetzt sein. Mit der mehr- bzw. zweiteiligen Ausführung des Aufnahmeelementes können Stärketoleranzen der Bodenplatten wirksam ausgeglichen werden. Ein zweiteiliges Aufnahmeelement kann beispielsweise aus dem Stützflansch und einem Gewindekorpus bestehen, wobei der Stützflansch als getrenntes Bauteil höhenverstellbar gegenüber dem Gewindekorpus angeordnet ist.

Die Höhenverstellbarkeit kann durch Drehung des Stützflansches gegenüber dem Gewindekorpus realisiert werden, wenn der Stützflansch über ein Innen- oder Außengewinde verfügt, welches mit einem Gegengewinde des Gewindekorpus eine Schraubverbindung bildet.

Hierbei kann die zylindrische Bohrung an der Bodenplatte abgestuft sein, vorzugsweise derart, dass die Abstufung einen schrägen Sitz bildet, zu dem eine Schräge des Gewindekorpus im montierten Zustand kompatibel ist.

Zumindest ein Teil des Innen- oder Außengewindes bzw. des Gegengewindes des Stützflansches und des Gewindekorpus kann segmentiert sein.

Die Platzierung und Festlegung des einteiligen Aufnahmeelementes im Loch der Bodenplatte kann durch einfache Eindrehhilfe erleichtert werden. Zu diesem Zweck können an einer Innenwand des Aufnahmeelementes Mulden eingebracht sein, in die ein Eindrehwerkzeug hineinpasst. Ähnlich bei dem zweiteiligen Aufnahmeelement: Hier kann der Stützflansch beispielsweise mit einigen Sacklöchern versehen sein, in die ebenso ein Eindrehwerkzeug eingreifen kann. Mit dem Eindrehwerkzeug kann beispielsweise ein Roboterarm ausgestattet werden.

Von großem Vorteil ist, dass das Duschbodenplatten-Modul so konzipiert ist, dass es ermöglicht, das Aufnahmeelement nur von einer Seite der Bodenplatte, nämlich von ihrer Unterseite einzumontieren. Dies vereinfacht die roboterunterstütze Montage des Aufnahmeelementes, da die Bodenplatte während der Fertigung des Duschbodenplatten-Moduls nicht mehr umgedreht werden muss. Ein weiterer Vorteil liegt bei der Senkung von Herstellungskosten.

Ausführungsbeispiele der Erfindung sind anhand der beigefügten Zeichnung näher erläutert. Die Figuren zeigen:
- Fig. 1: ein Duschbodenplatten-Modul, aufweisend eine Bodenplatte mit Duschablaufelementen, in einem vereinfachten, schematischen Schnitt;
- Fig. 2: das Duschbodenplatten-Modul gemäß Fig. 1 in einer perspektivischen Explosionsdarstellung;
- Fig. 3: ein einteiliges Aufnahmeelement mit Stützflansch, in einer perspektivischen Ansicht;
- Fig. 4: das Aufnahmeelement gemäß Fig. 3 mit sichtbaren inneren Ausnehmungen, in einer perspektivischen Ansicht;
- Fig. 5: das Aufnahmeelement gemäß Fig. 3, in einer Seitenansicht;
- Fig. 6: das Aufnahmeelement gemäß Fig. 3, in einer Draufsicht auf seine Unterseite;
- Fig. 7: einen Gewindekorpus eines zweiteiligen Aufnahmeelementes, in einer perspektivischen Ansicht;
- Fig. 8: das zweiteilige Aufnahmeelement mit dem Gewindekorpus gemäß Fig. 7, einmontiert in die Bodenplatte, in einem Schnitt;
- Fig. 9: ein vergrößertes Detail des in eine abgestufte Öffnung der Bodenplatte einmontierten Aufnahmeelementes gemäß Fig. 8;
- Fig. 10: ein vergrößertes Detail eines anderen, in eine zylindrische Öffnung der Bodenplatte einmontierten Aufnahmeelementes;
- Fig. 11: das auf einen Montagetisch aufgelegte, einstückige Aufnahmeelement gemäß Fig. 3 nach der Montage an der Bodenplatte, in einem Teilschnitt;
- Fig.12: das zweiteilige, ebenso auf einen Montagetisch aufgelegte Aufnahmeelement gemäß Fig. 9, in einem Teilschnitt;
- Fig. 13: eine andere Ausführungsform der einteiligen Aufnahmeelementes, welches mit seinem Schneidgewinde ins Material der Bodenplatte eingedreht ist, dargestellt in einem Teilschnitt;
- Fig. 14: das einteilige Aufnahmeelement gemäß Fig. 3, jedoch mit angedeuteter Segmentierung des Schneidgewindes und mit angespitzten Strukturelementen, in einer Draufsicht von oben und
- Fig.15: das Detail gemäß Fig. 9, jedoch mit einem anders angeordneten Stützflansch.

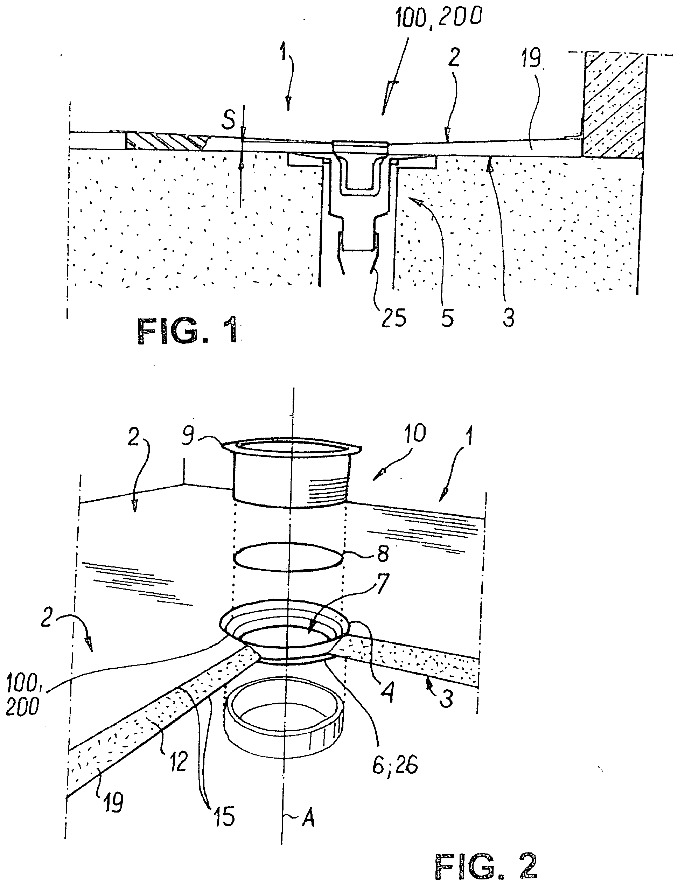

In Figuren 1 und 2 ist schematisch ein Duschbodenplatten-Modul 1 gezeigt, welcher sich aus einer Bodenplatte 19 und einem ringförmigen Aufnahmeelement 100 bzw. 200 für ein Brausetassen-Schraubventil 10 zusammensetzt. Das Brausetassen-Schraubventil 10 ist Bestandteil eines schematisch angedeuteten Wasserablaufs 5, welcher an ein senkrecht verlaufendes Abflussrohr 25 angeschlossen ist. Bei einer anderen, nicht dargestellten Ausführungsform ist ein waagerechter Wasserablauf vorgesehen.

Die Bodenplatte 19 ist - im vorliegenden Fall - in Draufsicht auf ihre Flachseite rechteckig, jedoch sind auch andere polygonalen Außenkonturen der Bodenplatte, wie Trapez-, Penta- oder Oktogon-Kontur, sowie gerundete Außenkonturen denkbar. Die letzteren können beispielsweise kreisrund, oval, kreissegment- oder schneckenförmig sein.

Die Bodenplatte 19 weist eine leicht konkave, einer kreisrunden Öffnung 4 zulaufende obere Flachseite 2 und eine plane, untere Flachseite 3 auf. Die Begriffe: "obere", "untere", "oben", "unten", "oberhalb" etc. beziehen sich auf die übliche Anordnung der Bodenplatte in einer Duschzelle, wie es auch den Figuren 1 und 2 zu entnehmen ist.

Die Bodenplatte 19 weist eine Hartschaumschicht 12 aus HFCKW-freiem, wasserundurchlässigem und wärmedämmendem, extrudiertem Polystyrol-Hartschaum auf, welcher beidseitig mit einer armierten Kunstmörtelschicht 15 (kunststoffmodifizierter Beschichtungsmörtel) verklebt ist.

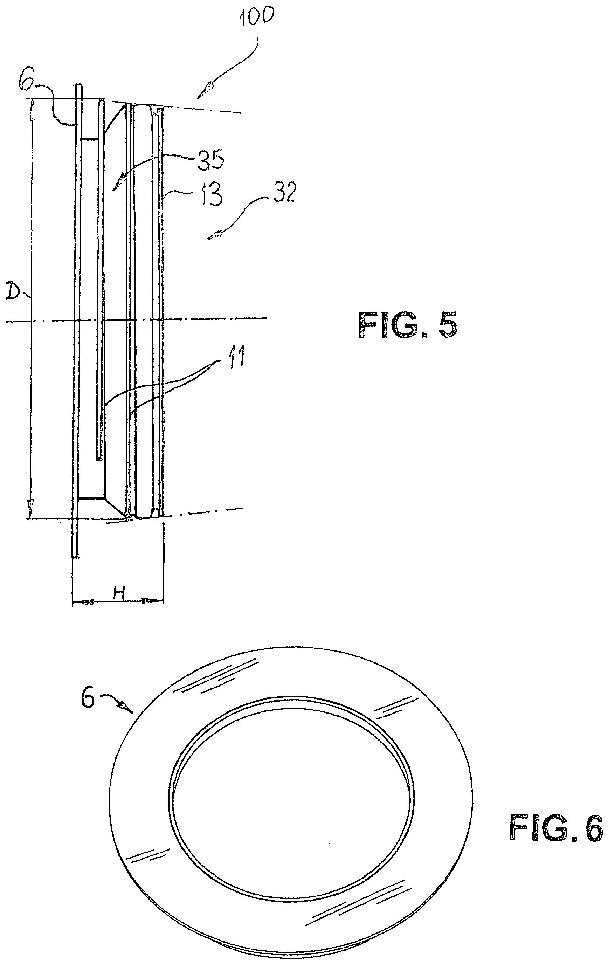

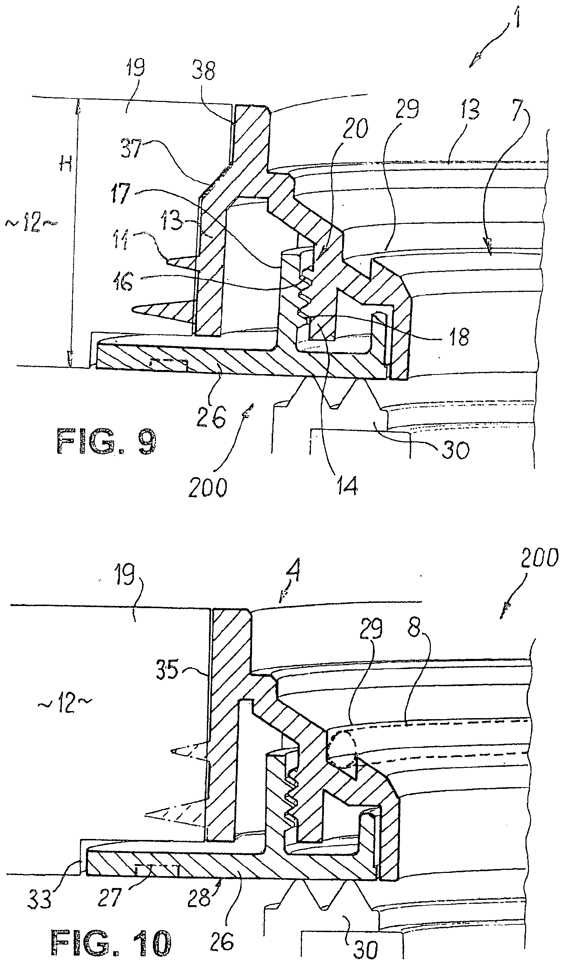

Weiterhin sind in Fig. 1 bzw. 2 folgende Einzelheiten zu sehen:
- Die Bodenplatte 19 hat im Bereich der Öffnung 4 ein Dickenmaß S, welches etwa einer in Figuren 5 und 9 gezeigten Gesamthöhe H des Aufnahmeelementes 100; 200 gleich ist;
- Ein Stützflansch 6; 26 des Aufnahmeelementes 100; 200 drückt im einmontierten Zustand gegen eine Unterseite, hier: untere Flachseite 3 (vgl. Fig. 2) der Bodenplatte 19;
- eine geneigte Innenfläche 7 des ringförmigen Aufnahmeelementes zum Einsetzen eines Kragens 9 des Brausetassen-Schraubventils 10, welche sich in Richtung Stützflansch 6; 26 verjüngt;
- ein elastomerer O-Ring 8 zum Einsetzen an einem umlaufenden, an der Innenfläche 7 profilierten Kanal 29 (vgl. Fig. 9) und
- ein an dem Brausetassen-Schraubventil 10 einschraubbarer, hülsenförmiger Dichteinsatz 30 mit Gummimantel 31.

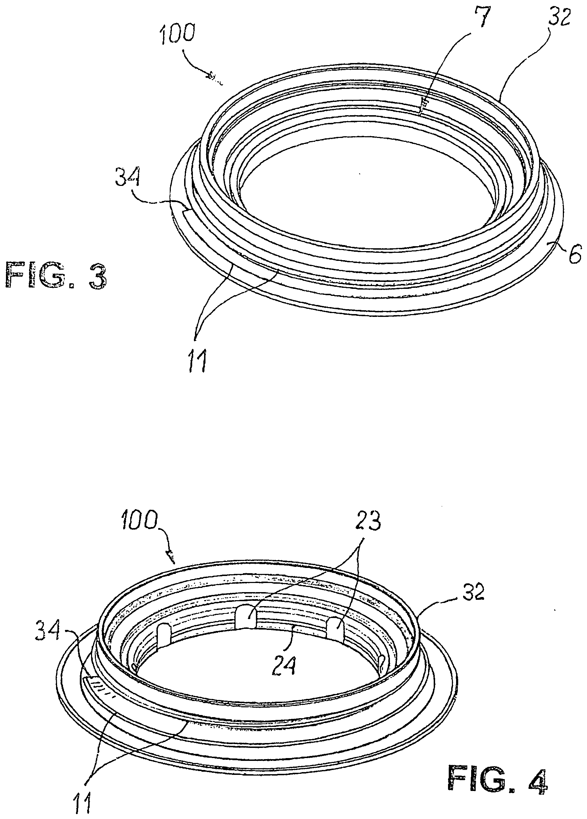

Das in einem Materialstück im Spritzgussverfahren gefertigte, in Figuren 3 bis 6 und 11 dargestellte, massive Aufnahmeelement 100 weist einen profilierten Ringkorpus 32 mit der besagten geneigten Innenfläche 7, dem nach außen ragenden Stützflansch 6 und einem Schneidgewinde 11 auf. Wie insbesondere die Figuren 3, 4 und 5 zeigen, weist das Schneidgewinde 11 einen in Richtung Stützflansch 6 ansteigenden Außendurchmesser D auf. Das Schneidgewinde 11 hat eine volle, fortlaufende Windung von einem Umfang etwa 720° und endet an seiner breitesten Stelle 34 oberhalb des Stützflansches 6. Ferner zeigt die Fig. 5 eine profilierte, teilweise konische Außenfläche 35 des Ringkorpus 32 mit dem besagten Schneidgewinde 11.

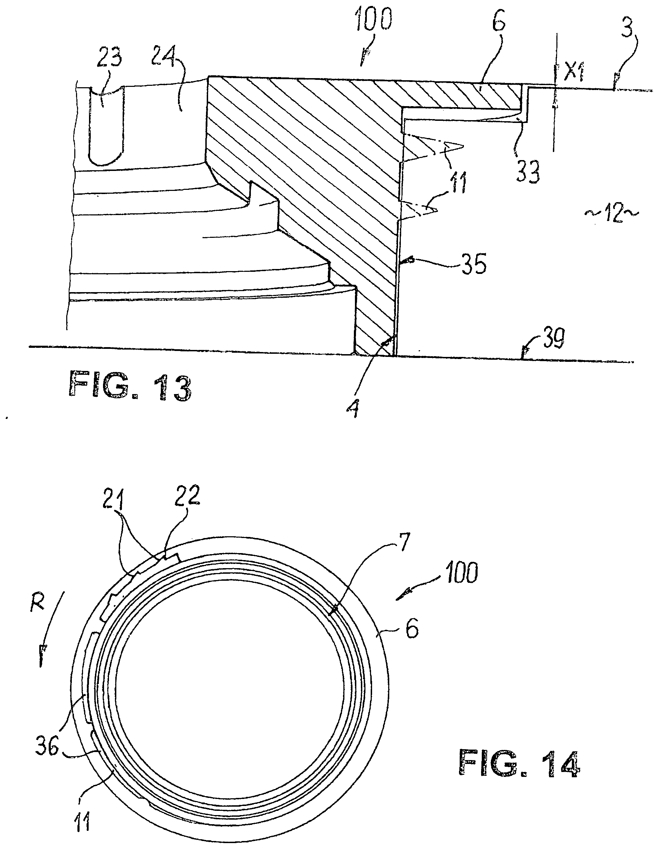

Gemäß Fig. 4 sind an einer zylindrischen Innenwand 24 des Aufnahmeelementes 100 muldenförmige Ausnehmungen 23 zum Einstecken eines nicht dargestellten Eindrehwerkzeuges eingebracht. Die Ausnehmungen 23 sind auch an der zylindrischen Innenwand 24 eines weiteren, ebenso massiven, einteiligen Aufnahmeelementes 100 gemäß Fig. 13 vorgesehen, dessen Außenfläche 35 bis zur Aussparung 33, abgesehen vom Schneidgewinde 11, zylindrisch ist.

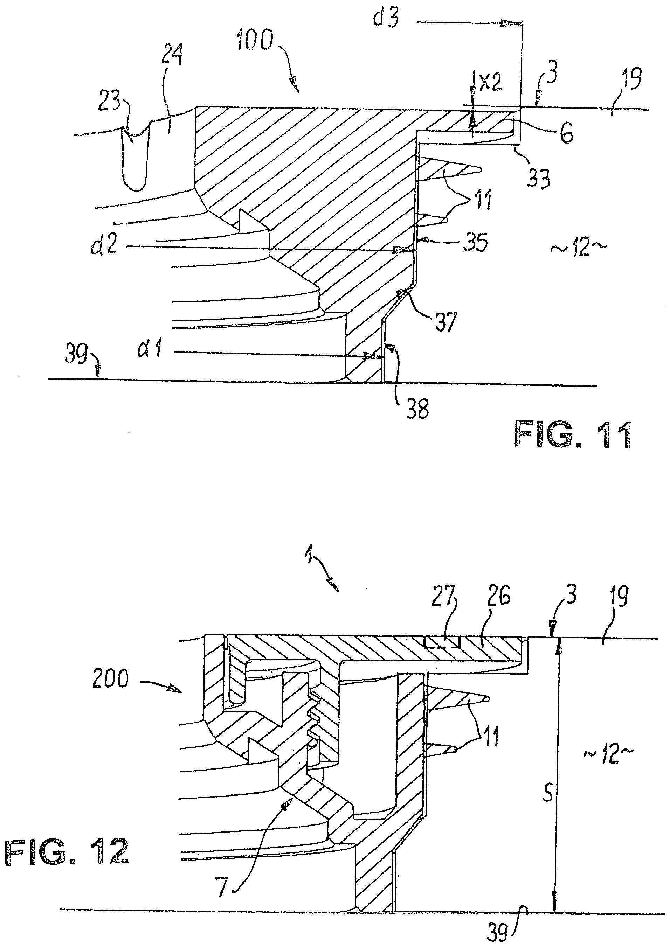

Die Außenfläche 35 des massiven Aufnahmeelementes 100 gemäß Fig. 11 verläuft zylindrisch bis zum nach außen ragenden Stützflansch 6 und schließt sich über eine Schräge 37 an einen oberen zylindrischen Flächenabschnitt 38 an.

Die Fig. 14 zeigt eine abweichende Ausführungsform des Aufnahmeelementes 100 bzw. 200, bei der das untere Teil des Schneidgewindes 11 in bogenförmige, sich in Eindrehrichtung R verjüngende, voneinander beabstandete Segmente 36 aufgeteilt ist. Zumindest das breiteste Segment des Schneidgewindes 11 ist mit einigen widerhakenartigen Strukturelementen 21 versehen, die jeweils eine gegen die Eindrehrichtung R gerichtete Spitze 22 aufweist.

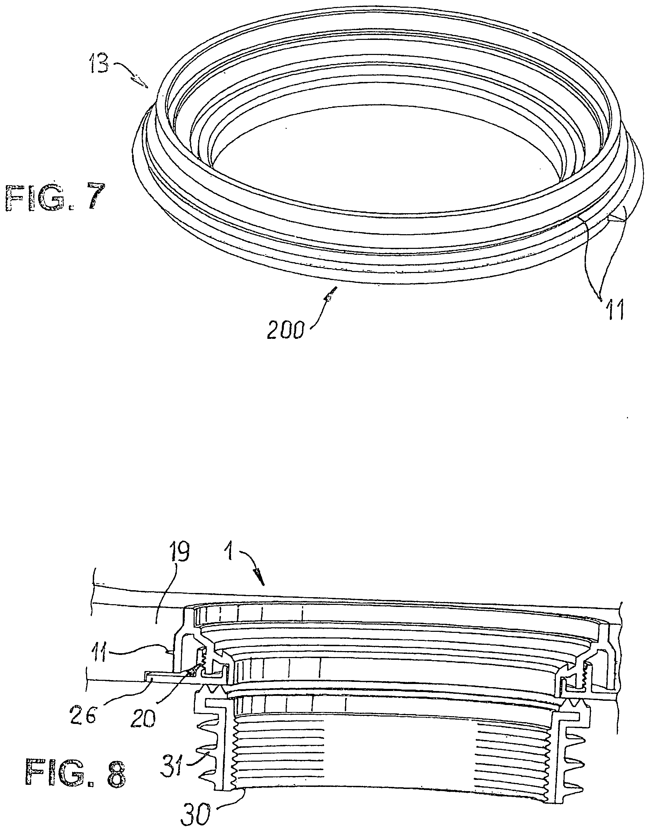

Das in Figuren 7 bis 9 dargestellte, zweiteilige Aufnahmeelement 200 besteht aus einem Gewindekorpus 13 und dem Stützflansch 26, welcher höhenverstellbar gegenüber dem Gewindekorpus 13 angeordnet ist. Zu diesem Zweck weist der Stützflansch 26 einen umlaufenden, in zusammengesetzten Zustand auf den Gewindekorpus 13 gerichteten Schenkel 17 (vgl. insbesondere Fig. 9) mit Innengewinde 18 auf, welcher mit einem Außengewinde 16 eines umlaufenden Schenkels 14 des Gewindekorpus 13 eine Schraubverbindung 20 bildet.

Der Gewindekorpus 13 gemäß Fig. 9 ist von seiner äußeren Form dem massiven Aufnahmeelement 100 gemäß Fig. 11 (mit Schräge 37) teilweise ähnlich. Dasselbe betrifft den Gewindekorpus 13 gemäß Fig. 10, welcher dem massiven Aufnahmeelement 100 gemäß Fig. 13 (zylindrische Außenfläche 35) ähnelt.

Gemäß Figuren 10 und 13 ist die Öffnung 4 an der Bodenplatte 19 durchgehend zylindrisch mit Ausnahme einer kreisförmigen koaxialen Aussparung 33 zur Aufnahme des Stützflansches 26 bzw. 6. In die Öffnung 4 passt der ins Material der Bodenplatte 19 eingedrehte Gewindekorpus 13 und entsprechend das massive Aufnahmeelement 100 gemäß Fig. 13 hinein.

Gemäß Figuren 9 und 11 ist die Öffnung 4 an der Bodenplatte 19 abgestuft. So sind der Fig. 11 drei unterschiedliche Innendurchmesser d1, d2, d3 zu sehen, von denen der Innendurchmesser d1 einem Teil der Öffnung 4 entspricht, welcher den zylindrischen Flächenabschnitt 38 des Aufnahmeelementes 100 dicht umgibt. Dementsprechend ist der mittlere Innendurchmesser d2 der Öffnung 4 an den mittleren, zylindrischen Teil der Außenfläche 35 des Aufnahmeelementes 100 angepasst. Der Innendurchmesser d3 bezieht sich auf die vorgenannte Aussparung 33 zur Aufnahme des Stützflansches 6 bzw. 26.

Das Verfahren zur Herstellung des Duschbodenplatten-Moduls 1 umfasst folgende Verfahrensschritte:
a. Bereitstellung eines Rohschaumkörpers von vorbestimmten Ausmaßen, im vorliegenden Fall eines rechteckigen Rohschaumkörpers, bestehend aus Hartschaumschicht 12 aus extrudiertem Polystyrol-Hartschaum;
b. Drauflegen einer textilen oder metallenen Armierung und beidseitiges Beschichten des Rohschaumkörpers (Hartschaumschicht 12) mit einem kunststoffmodifizierten Beschichtungsmörtel;
c. Aushärten des Beschichtungsmörtels bis eine erstarrte Kunstmörtelschicht 15 entsteht,
d. Einbringen einer durchgehenden, zylindrischen bzw. abgestuften Öffnung 4 an der fertigen Bodenplatte 19,
e. Einsetzen des ringförmigen Aufnahmeelementes 100 bzw. des Gewindekorpus 13 in die Öffnung 4 nur von der unteren Flachseite 3 der Bodenplatte 19 durch Eindrehen in ihre Hartschaumschicht 12 derart, dass das sich das Schneidgewinde 11 formschlüssig in das Material der Hartschaumschicht 12 einschneidet.

Der letztere Punkt "e" des Verfahrens kann anhand der Figuren 11 bis 13 geklärt werden. Die Figuren zeigen jeweils eine auf einen ebenen Montagetisch 39 flach gelegte Bodenplatte 19, in deren Öffnung 4 das Schneidgewinde 11 des Aufnahmeelementes 100 bzw. des Gewindekorpus 13 von der Unterseite (Flachseite 3) der Bodenplatte 19 eingedreht ist. Die untere Flachseite 3 der Bodenplatte 19 liegt jetzt oben, dagegen die obere Flachseite 2 liegt unten an der Ebene des Montagetisches 39 an.

Diese Montage-Anordnung der Bodenplatte 19 ermöglicht das Eindrehen des Aufnahmeelementes 100 bzw. 200 mit Hilfe eines Eindrehwerkzeuges (nicht dargestellt), mit welchem ein Roboterarm bestückt ist, von der unteren Flachseite 3 der Bodenplatte 19. Das Eindrehwerkzeug greift in die Ausnehmungen 23 (vgl. Fig. 13) an der zylindrischen Innenwand 24 bzw. in die an einer Unterseite 28 des Stützflansches 26 eingebrachten sacklochförmigen Ausnehmungen 27 (vgl. Fig. 12) ein. Eingedreht wird bis zum Anschlag, d. h. bis zur Ebene des Montagetisches 39, so dass das Aufnahmeelement 100; 200 mit den beiden Flachseiten 2,3 der Bodenplatte 19 grundsätzlich in Flucht liegt.

Da die Bodenplatten 19 eine herstellungstechnisch bedingte Dickentoleranz haben, kann das eingedrehte einteilige Aufnahmeelement 100 von der Flachseite 3 geringfügig abstehen und einen Differenzbetrag X1 (vgl. Fig. 13) bilden. Andererseits kann das eingedrehte Aufnahmeelement 100 etwas unterhalb der Flachseite 3 liegen (vgl. Differenzbetrag X2; Fig. 11).

Diese Unstimmigkeiten werden mit der zweiteiligen Ausführung gemäß Figuren 8, 9, 10 und 12 ausgeräumt, da nach der Festlegung des Gewindekorpus 13 in der Öffnung 4 der Stützflansch 26 mit seinem Schenkel 17 ausreichend genau in der Höhe justiert werden kann. Wie die Fig. 12 zeigt, liegt der Stützflansch 26 mit der Flachseite 3 der Bodenplatte 19 in Flucht.

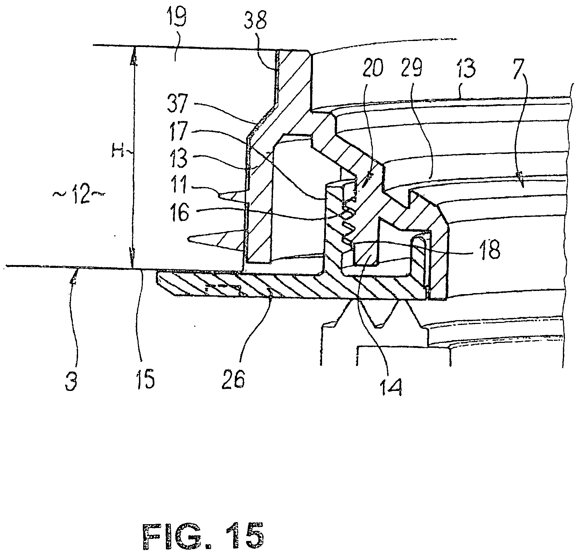

Gemäß Fig. 15 liegt der Stützflansch 26 auf der Kunstmörtelschicht 15 der unteren Flachseite 3 der Bodenplatte 19 auf.

**Bezugszeichenliste:**

| | |
|---|---|
| 1. | Duschbodenplatten- Modul |
| 2. | Flachseite (oben) |
| 3. | Flachseite (unten) |
| 4. | Öffnung (Bohrung) |
| 5. | Wasserablauf |
| 6. | Stützflansch |
| 7. | Innenfläche |
| 8. | O-Ring |
| 9. | Kragen |
| 10. | Brausetassen-Schraubventil |
| 11. | Schneidgewinde |
| 12. | Hartschaumschicht |
| 13. | Gewindekorpus |
| 14. | Schenkel |
| 15. | Kunstmörtelschicht |
| 16. | Außengewinde |
| 17. | Schenkel |
| 18. | Innengewinde |
| 19. | Bodenplatte |
| 20. | Schraubverbindung |
| 21. | Strukturelement |
| 22. | Spitze |
| 23. | Ausnehmung |
| 24. | Innenwand |
| 25. | Abflussrohr |
| 26. | Stützflansch |
| 27. | Ausnehmung (Sackloch) |
| 28. | Unterseite (v. 26) |
| 29. | Kanal |
| 30. | Dichteinsatz |
| 31. | Gummimantel |
| 32. | Ringkorpus |
| 33. | Aussparung |
| 34. | breiteste Stelle (v. 11) |
| 35. | Außenfläche (v. 100) |
| 36. | Segment (v. 11) |
| 37. | Schräge (v. 100) |
| 38. | Flächenabschnitt |
| 39. | Montagetisch |
| **100; 200** | **Aufnahmeelement** |
| d1, d2 ,d3 | Innendurchmesser (v. 4) |
| D | Außendurchmesser |
| H | Gesamthöhe |
| R | Eindrehrichtung |
| S | Dickenmaß |
| X1, X2 | Differenzbetrag |

## Patentansprüche

1. Duschbodenplatten-Modul (1), umfassend:
- eine Bodenplatte (19), aufweisend wenigstens eine Hartschaumschicht (12), welche wenigstens von einer ihren Flachseiten (2; 3) mit einem kunststoffmodifizierten Beschichtungsmörtel (15) beschichtet ist, wobei an der Bodenplatte (19) eine durchgehende Öffnung (4) eingearbeitet ist,
- ein in der Öffnung (4) platziertes Aufnahmeelement (100; 200) für ein Brausetassen-Schraubventil (10) eines Wasserablaufs (5), welcher mit einem Abflussrohr (25) zu verbinden ist,
- wobei das Aufnahmeelement (100; 200) eine geneigte Innenfläche (7) zum Einsetzen eines Kragens (9) des Brausetassen-Schraubventils (10) aufweist,
- wobei die besagte Innenfläche (7) - im montierten Zustand des Aufnahmeelementes (100; 200) - sich in Richtung Abflussrohr (25) verjüngt,
- und wobei das Aufnahmeelement (100; 200) eine Gesamthöhe (H) aufweist, welche etwa einem Dickenmaß (S) im Bereich der Öffnung (4) der Bodenplatte (19) entspricht,
**dadurch gekennzeichnet, dass**
das Aufnahmeelement (100; 200) ein Schneidgewinde (11) aufweist, dessen Außendurchmesser (D) - im eingesetzten Zustand des Aufnahmeelementes (100; 200) - in Richtung Abflussrohr (25) ansteigt.

2. Duschbodenplatten-Modul (1) nach Anspruch 1, **dadurch gekennzeichnet, dass** die Bodenplatte (19) auf ihrer dem Abflussrohr (25) zugewandten Flachseite (3) von einem nach außen ragenden Stützflansch (6; 26) des Aufnahmeelementes (100; 200) unterlegt ist.

3. Duschbodenplatten-Modul (1) nach Anspruch 1, **dadurch gekennzeichnet, dass** die Öffnung (4) an der Bodenplatte (19) durchgehend zylindrisch ist.

4. Duschbodenplatten-Modul (1) nach Anspruch 3, **dadurch gekennzeichnet, dass** die zylindrische Öffnung (4) derart abgestuft ist, dass sie wenigstens zwei unterschiedliche Innendurchmesser (d1, d2, d3) aufweist.

5. Duschbodenplatten-Modul (1) nach Anspruch 1, **dadurch gekennzeichnet, dass** das Schneidgewinde (11) wenigstens ein zahn- oder widerhakenartiges Strukturelement (21) aufweist, welches mit seiner Spitze (22) gegen eine Eindrehrichtung (R) des Aufnahmeelementes (100; 200) gerichtet ist.

6. Duschbodenplatten-Modul (1) nach Anspruch 1, **dadurch gekennzeichnet, dass** das Aufnahmeelement (100) samt Stützflansch (6) in einem Materialstück aus Kunststoff oder Metall gefertigt ist.

7. Duschbodenplatten-Modul (1) nach Anspruch 1, **dadurch gekennzeichnet, dass** das Aufnahmeelement (200) aus einem Gewindekorpus (13) und dem Stützflansch (26) besteht, wobei der Stützflansch (26) als getrenntes Bauteil höhenverstellbar gegenüber dem Gewindekorpus (13) angeordnet ist.

8. Duschbodenplatten-Modul (1) nach Anspruch 7, **dadurch gekennzeichnet, dass**
- der Gewindekorpus (13) einen mittleren, wenigstens teilweise umlaufenden Schenkel (14) aufweist, an dem ein Außengewinde (16) eingebracht ist,
- der Stützflansch (26) einen wenigstens teilweise umlaufenden Schenkel (17) aufweist, an dem ein Innengewinde (18) angeordnet ist, und
- das Außengewinde (16) und das Innengewinde (18) eine Schraubverbindung (20) bilden.

9. Duschbodenplatten-Modul (1) nach einem der vorhergehenden Ansprüche, **dadurch gekennzeichnet, dass** das Schneidgewinde (11) und/oder das Außengewinde (16) und/oder das Innengewinde (18) segmentierbar ist.

10. Duschbodenplatten-Modul (1) nach einem der vorhergehenden Ansprüche, **dadurch gekennzeichnet, dass** das Aufnahmeelement (100; 200) als Spritzgussteil vorliegt.

11. Duschbodenplatten-Modul (1) nach einem der vorhergehenden Ansprüche, **dadurch gekennzeichnet, dass** das Aufnahmeelement (100; 200) durch eine Kunststoffbearbeitung in einem computergesteuerten 3D-Drucker oder im Lasersinterverfahren entstanden ist.

12. Duschbodenplatten-Modul (1) nach einem der vorhergehenden Ansprüche, **dadurch gekennzeichnet, dass** an dem Aufnahmeelement (100; 200) wenigstens eine muldenförmige Ausnehmung (23; 27) fürs Einstecken eines Eindrehwerkzeuges vorgesehen ist.

13. Duschbodenplatten-Modul (1) nach Anspruch 12, **dadurch gekennzeichnet, dass** die Ausnehmung (23) an einer zylindrischen Innenwand (24) des Aufnahmeelementes (100) angeordnet ist.

14. Duschbodenplatten-Modul (1) nach Anspruch 12, **dadurch gekennzeichnet, dass** die Ausnehmung (27) an einer Unterseite (28) des Stützflansches (26) des Aufnahmeelementes (200) angeordnet ist.

15. Verfahren zur Herstellung eines Duschbodenplatten-Moduls (1) nach einem der Ansprüche 1 bis 14, umfassend folgende Verfahrensschritte:
a. Bereitstellung eines Rohschaumkörpers (Hartschaumschicht 12) aus extrudiertem Polystyrol-Hartschaum (XPS), oder expandiertem Polystyrol-Hartschaum (EPS) von vorbestimmten Ausmaßen,
b. Drauflegen einer textilen oder metallenen Armierung und beidseitiges Beschichten des Rohschaumkörpers mit einer flüssigen, kunststoffmodifizierten Beschichtungsmörtel (15),
c. Aushärten des Beschichtungsmörtels (15),
d. Einbringen einer durchgehenden, zylindrischen Öffnung (4) an der fertigen Bodenplatte (19),
e. Einsetzen des Aufnahmeelementes (100) bzw. des Gewindekorpus (13) in die Öffnung (4) von der Unterseite (3) der Bodenplatte (19) durch Eindrehen in ihre Hartschaumschicht (12) derart, dass das sich das Schneidgewinde (11) formschlüssig in das Material der Hartschaumschicht (12) einschneidet.

16. Verfahren nach Anspruch 15, **dadurch gekennzeichnet, dass** nach der Festlegung des Gewindekorpus (13) in der Öffnung (4) der Stützflansch (26) mit seinem Schenkel (17) in den Gewindekorpus (13) unter Berücksichtigung der Höhentoleranz eingedreht und dort justiert wird.

## Claims

1. Shower floor plate module (1), comprising:
- a floor plate (19) which has at least one rigid foam layer (12) which on at least one of its flat sides (2; 3) is coated with a polymer-modified coating mortar (15), wherein a continuous opening (4) is incorporated in the floor plate (19),
- a receptacle element (100; 200), placed in the opening (4), for a screw-type shower tray valve (10) of a water outlet (5) which is to be connected to a drain pipe (25),
- wherein the receptacle element (100; 200) has an inclined inner face (7) for inserting a collar (9) of the screw-type shower tray valve (10),
- wherein said inner face (7) in the assembled state of the receptacle element (100; 200) tapers off in the direction of the drain pipe (25),
- and wherein the receptacle element (100; 200) has a total height (H) which corresponds to approximately a thickness dimension (S) in the region of the opening (4) of the floor plate (19),
**characterized in that**
the receptacle element (100; 200) has a cutting thread (11), the external diameter (D) of which in the inserted state of the receptacle element (100; 200) increases in the direction of the drain pipe (25).

2. Shower floor plate module (1) according to Claim 1, **characterized in that** the floor plate (19) on the flat side (3) thereof which faces the drain pipe (25) is underlaid by an outwardly protruding support flange (6; 26) of the receptacle element (100; 200).

3. Shower floor plate module (1) according to Claim 1, **characterized in that** the opening (4) on the floor plate (19) is continuously cylindrical.

4. Shower floor plate module (1) according to Claim 3, **characterized in that** the cylindrical opening (4) is graded in such a manner that it has at least two different internal diameters (d1, d2, d3) .

5. Shower floor plate module (1) according to Claim 1, **characterized in that** the cutting thread (11) has at least one tooth-like or barb-like structural element (21) which by way of its tip (22) is directed counter to a screw-in direction (R) of the receptacle element (100; 200).

6. Shower floor plate module (1) according to Claim 1, **characterized in that** the receptacle element (100) together with the support flange (6) is integrally made from plastics or metal.

7. Shower floor plate module (1) according to Claim 1, **characterized in that** the receptacle element (200) is composed of a threaded base (13) and the support flange (26), wherein the support flange (26) as a separate component is disposed so as to be readjustable for height in relation to the threaded base (13).

8. Shower floor plate module (1) according to Claim 7, **characterized in that**
- the threaded base (13) has a central and at least partially encircling leg (14) on which an external thread (16) is incorporated,
- the support flange (26) has an at least partially encircling leg (17) on which an internal thread (18) is disposed, and
- the external thread (16) and the internal thread (18) form a screw connection (20).

9. Shower floor plate module (1) according to one of the preceding claims, **characterized in that** the cutting thread (11) and/or the external thread (16) and/or the internal thread (18) are segmentable.

10. Shower floor plate module (1) according to one of the preceding claims, **characterized in that** the receptacle element (100; 200) is provided as an injection-molded part.

11. Shower floor plate module (1) according to one of the preceding claims, **characterized in that** the receptacle element (100; 200) has been created by plastics processing in a computer-controlled 3-D printer or by the laser sintering method.

12. Shower floor plate module (1) according to one of the preceding claims, **characterized in that** at least one trough-shaped clearance (23; 27) for inserting a driver tool is provided on the receptacle element (100; 200).

13. Shower floor plate module (1) according to Claim 12, **characterized in that** the clearance (23) is disposed on a cylindrical inner wall (24) of the receptacle element (100).

14. Shower floor plate module (1) according to Claim 12, **characterized in that** the clearance (27) is disposed on a lower side (28) of the support flange (26) of the receptacle element (200).

15. Method for manufacturing a shower floor plate module (1) according to one of Claims 1 to 14, the method comprising the following method steps:
a. providing a blank foam body (rigid foam layer 12) from extruded rigid polystyrene foam (XPS) or expanded rigid polystyrene foam (EPS) having predetermined dimensions,
b. applying thereon a textile or metallic reinforcement and bi-laterally coating the blank foam body with a liquid, polymer-modified coating mortar (15),
c. curing the coating mortar (15),
d. incorporating a continuous cylindrical opening (4) in the completed floor plate (19),
e. inserting the receptacle element (100), or the threaded base (13), respectively, into the opening (4) from the lower side (3) of the floor plate (19), by screwing the former into the rigid foam layer (12) of the latter in such a manner that the cutting thread (11) cuts its way in a form-fitting manner into the material of the rigid foam layer (12).

16. Method according to Claim 15, **characterized in that** after securing the threaded base (13) in the opening (4), the support flange (26) by way of the leg (17) thereof is screwed into the threaded base

## Revendications

1. Module de plaque de sol de douche (1), comprenant :
une plaque de sol (19), présentant au moins une couche de mousse rigide (12) revêtue, depuis au moins un de ses côtés plats (2 ; 3) par un mortier de revêtement (15) modifié par matière plastique, une ouverture traversante (4) étant réalisée au niveau de la plaque de sol (19) ;
un élément de réception (100 ; 200) prévu pour une vanne de receveur de douche (10) d'une évacuation d'eau (5), placé dans l'ouverture (4) et à relier à un tube d'écoulement (25) ;
l'élément de réception (100 ; 200) comportant une surface intérieure (7) inclinée pour placer un collet (9) de la vanne de receveur de douche (10) ;
ladite surface intérieure (7) se rétrécissant - à l'état monté de l'élément de réception (100 ; 200) - en direction du tube d'écoulement (25) ; et
l'élément de réception (100 ; 200) comportant une hauteur totale (H) correspondant approximativement à une dimension d'épaisseur (S) dans la région de l'ouverture (4) de la plaque de sol (19) ;
**caractérisé en ce que** :
l'élément de réception (100 ; 200) comporte un filet taraudeur (11) dont le diamètre extérieur (D) augmente - dans l'état inséré de l'élément de réception (100 ; 200) - en direction du tube d'écoulement (25).

2. Module de plaque de sol de douche (1) selon la revendication 1, **caractérisé en ce que** la plaque de sol (19) est calée sur son côté plat (3) orienté vers le tube d'écoulement (25) par une bride de maintien (6 ; 26), saillant vers l'extérieur, de l'élément de réception (100 ; 200).

3. Module de plaque de sol de douche (1) selon la revendication 1, **caractérisé en ce que** l'ouverture (4) prend une forme cylindrique traversante au niveau de la plaque de sol (19).

4. Module de plaque de sol de douche (1) selon la revendication 3, **caractérisé en ce que** l'ouverture cylindrique (4) est échelonnée de telle sorte qu'elle comporte au moins deux diamètres intérieurs (d1, d2, d3) différente.

5. Module de plaque de sol de douche (1) selon la revendication 1, **caractérisé en ce que** le filet taraudeur (11) comporte au moins un élément structurel (21) de type crochet denté ou contre-crochet orienté avec sa pointe (22) contre une direction de vissage (R) de l'élément de réception (100 ; 200).

6. Module de plaque de sol de douche (1) selon la revendication 1, **caractérisé en ce que** l'élément de réception (100) est fabriqué en une pièce de matière en matière plastique ou en métal, y compris la bride de maintien (6).

7. Module de plaque de sol de douche (1) selon la revendication 1, **caractérisé en ce que** l'élément de réception (200) se compose d'un corps de filet (13) et de la bride de maintien (26), la bride de maintien (26) étant disposée sous la forme d'un composant séparé réglable en hauteur par rapport au corps de filet (13).

8. Module de plaque de sol de douche (1) selon la revendication 7, **caractérisé en ce que** :
le corps de filet (13) comporte un côté (14) central au moins en partie périphérique au niveau duquel un filet extérieur (16) est amené ;
la bride de maintien (26) comporte un côté (17) au moins en partie périphérique au niveau duquel un filet intérieur (18) est disposé ; et
le filet extérieur (16) et le filet intérieur (18) forment une liaison vissée (20).

9. Module de plaque de sol de douche (1) selon l'une quelconque des revendications précédentes, **caractérisé en ce que** le filet taraudeur (11) et/ou le filet extérieur (16) et/ou le filet intérieur (18) peut être segmenté.

10. Module de plaque de sol de douche (1) selon l'une quelconque des revendications précédentes, **caractérisé en ce que** l'élément de réception (100 ; 200) prend la forme d'une pièce moulée par injection.

11. Module de plaque de sol de douche (1) selon l'une quelconque des revendications précédentes, **caractérisé en ce que** l'élément de réception (100 ; 200) est produit par un traitement de matière plastique dans une imprimante 3D commandée par ordinateur ou au cours d'un procédé de frittage par laser.

12. Module de plaque de sol de douche (1) selon l'une quelconque des revendications précédentes, **caractérisé en ce qu'**au moins un évidement (23 ; 27) en forme de bac est prévu au niveau de l'élément de réception (100 ; 200) pour l'enfichage d'un outil de vissage.

13. Module de plaque de sol de douche (1) selon la revendication 12, **caractérisé en ce que** l'évidement (23) est disposé au niveau d'une paroi intérieure cylindrique (24) de l'élément de réception (100).

14. Module de plaque de sol de douche (1) selon la revendication 12, **caractérisé en ce que** l'évidement (27) est disposé au niveau d'un côté inférieur (28) de la bride de maintien (26) de l'élément de réception (200).

15. Procédé de fabrication d'un module de plaque de sol de douche (1) selon l'une quelconque des revendications 1 à 14, comprenant les étapes de procédé suivantes :
a. mise à disposition d'un corps de mousse brute (couche de mousse rigide 12) en mousse rigide de polystyrène extrudé (XPS), ou en mousse rigide de polystyrène expansé (EPS) de dimensions prédéfinies ;
b. recouvrement par une armature textile ou métallique et revêtement des deux côtés du corps de mousse brute au moyen d'un mortier de revêtement (15) fluide modifié par matière plastique ;
c. durcissement du mortier de revêtement (15) ;
d. réalisation d'une ouverture cylindrique (4) traversante au niveau de la plaque de sol (19) finie ;
e. insertion de l'élément de réception (100) et/ou du corps de filet (13) dans l'ouverture (4) en partant du côté inférieur (3) de la plaque de sol (19) par vissage dans sa couche de mousse rigide (12) de telle sorte que le filet taraudeur (11) pénètre par complémentarité de formes dans le matériau de la couche de mousse rigide (12).

16. Procédé selon la revendication 15, caractérisé en qu'après fixation du corps de filet (13) dans l'ouverture (4), la bride de maintien (26) est tournée avec son côté (17) dans le corps de filet (13) en tenant compte de la tolérance de hauteur puis elle est ajustée à cet endroit.
